# EUROPEAN PATENT APPLICATION

(11) **EP 3 832 782 A1**
(43) Date of publication of application: **09.06.2021**
(21) Application number: 19923985.6
(22) Date of filing: 05.08.2019
(51) Int. Cl.: H01M 10/54

(54) **RECYCLING METHOD FOR POSITIVE ELECTRODE MATERIAL, POSITIVE ELECTRODE MATERIAL PRODUCED, AND USES THEREOF**

(30) Priority: 09.04.2019 CN 201910280546
(71) Applicant: BTR (Tianjin ) Nano Material Manufacture Co., Ltd., Tianjin 301800 (CN)
(72) Inventor: YUE, Haifeng, Shenzhen, Guangdong 518106 (CN); XI, Xiaobing, Shenzhen, Guangdong 518106 (CN); YANG, Shunyi, Shenzhen, Guangdong 518106 (CN); HUANG, Youyuan, Shenzhen, Guangdong 518106 (CN); HE, Xueqin, Shenzhen, Guangdong 518106 (CN)
(74) Representative: Long, Giorgio
(86) International application number: PCT/CN2019/099177
(87) International publication number: WO 2020/206884

(57) **Abstract**

A recycling method for a positive electrode material. The method comprises the following steps: sintering a positive electrode material to be recycled in an oxidizing atmosphere to produce the positive electrode material; gases in the oxidizing atmosphere comprising CO2. The positive electrode material produced has a reduced carbon content, great cycle stability and rate performance, the carbon content being ≤ 2.85 wt%, and the 200-cycle capacity retention rate being ≥ 99.0%.

## Description

### Technical Field

The present disclosure pertains to the field of recycling of waste lithium ion batteries and relates to a method for recycling a positive material, a positive material so obtained, and use thereof.

### Background Art

Lithium ion batteries, with the advantages such as a high charging voltage, large specific energy, long cycle life, good safety performance, no memory effect, and low self-discharge, have been widely used in the field of portable electronic products including mobile phones, notebook computers, video cameras, digital cameras, and medical devices since they are commercialized in the 1990s. In recent years, as the prices of consumer electronic products such as mobile phones and notebook computers have fallen sharply, the popularity of these products has been greatly increased, which has led to a yearly progressive increase in the demand for lithium ion batteries in China. Currently, China has become the largest producer, consumer, and exporter of lithium ion batteries.

Due to the upcoming large-scale decommissioning of lithium batteries, the recycling of lithium battery materials is an inevitable step for creating a closed loop in the industry. As key parts of lithium batteries, positive materials are given top priority in recycling and reuse. Power batteries with an energy of about 24 GWh will be decommissioned in China by 2020, and batteries with an accumulative energy of more than 100 GWh will be decommissioned in the following five years. With the continuous increase in the installed capacity of lithium batteries in the future, more and more corresponding lithium battery materials need to be scrapped and recycled in the future. It is necessary to create a closed-loop recycling of lithium battery materials in the industry so that new energy materials always remain green (or environmentally friendly), rather than changing from green materials to black (or non-environmentally friendly) materials after the end of their life cycles. This provides significant social and environmental benefits.

CN108306071A discloses a process for recycling a positive material from a waste lithium ion battery, which includes the steps of: (1) disassembling and slitting the waste lithium ion battery and treating it at high temperature in a tube furnace; (2) immersing and dissolving the obtained positive material in an acidic solvent and then filtering to obtain a filtrate; (3) extracting the filtrate with D2EHPA by countercurrent cascade extraction; (4) adding a manganese source to the raffinate obtained in step (3) at a set ratio of elements of a precursor, adjusting the composition of the raw material at the designed ratio of the elements of the precursor for the positive material, adding an ammonia solution to the raw material and placing the resulting mixture in a co-precipitation reactor, then adding a sodium hydroxide solution to adjust the pH to 10 to 12, and causing the mixture to react for 8 to 24 h and then filtering, washing the precipitation to obtain a precipitated positive material. The recycling process allows the complete recycling of the positive material and the positive electrode current collector, but the preparation process is complicated so that it is difficult to industrially recycle positive materials from waste lithium ion batteries.

CN102751549B discloses a full-component resource recycling method for a positive material from a waste lithium ion battery. The method includes: (1) separating an active substance and an aluminum foil from a positive material of a waste lithium ion battery by using an aqueous solution of a fluorine-containing organic acid, and obtaining a leachate, a lithium-containing active substance, and an aluminum foil by liquid-solid-solid separation; (2) roasting the lithium-containing active substance at high temperature and removing an impurity from the lithium-containing active substance with an alkali solution; (3) recovering the fluorine-containing organic acid by distilling the leachate with an acid added, precipitating impurity ions by adding an alkali to the leachate, and preparing a ternary precursor consisting of nickel-cobalt-manganese carbonate by coprecipitation of the leachate with ammonium carbonate; and (4) regulating components in a mixture of the treated active substance and the ternary precursor consisting of nickel-cobalt-manganese carbonate, adding lithium carbonate in a certain proportion, and then sintering the mixture in solid phase at high temperature so as to prepare a ternary composite positive material consisting of nickel cobalt lithium manganate. The preparation method is applicable in a wide range, but the positive material so prepared has low purity.

CN107699692A discloses a method for recovering and recycling a positive material from a waste lithium ion battery and pertains to the field of waste reclamation. In the method, a positive material of a waste lithium ion battery obtained by treatment of the waste lithium ion battery is mixed with an organic acid. When a solution containing metal ions is obtained, a water-soluble salt of the metal ions is added, thus its pH is adjusted, the solution is stirred until a gel is formed, and the gel is dried and then calcined and grinded to obtain a recycled positive material for a lithium ion battery. Alternatively, when a precipitation is obtained, a lithium source is added, and the resulting mixture is calcined and grinded to obtain a recycled positive material for a lithium ion battery. The method involves a leaching process without generation of secondary pollution, has high leaching efficiency, and requires low cost, but the positive material so prepared has low purity.

In the related technologies, the methods for recycling waste positive materials have not involved the regulation of carbon content. The positive materials so recycled still contain a variety of carbon sources such as conductive agents and binders added during slurrying, and may also be accompanied by peeling of coated carbon and should be post-treated with carbon coating. Thus, the recycled positive materials contain a significantly higher carbon content and a lower amount of effective active substances, which will result in a reduced energy density. Therefore, there is a need in the art to develop a method for recycling a positive material, which enables effective control of the carbon content in the recycled positive material and which involves a simple preparation process, is suitable for industrialized production, and allows the preparation of a positive material with good electrochemical performance.

### Summary

The subject matters to be described in detail herein are summarized below. This summary is not intended to limit the scope of protection of the claims.

A first objective of the present disclosure is to provide a method for recycling a positive material. The method includes a step of:
sintering a positive material to be recycled in an oxidizing atmosphere to obtain the recycled positive material,
wherein gas in the oxidizing atmosphere includes CO₂.

In the present disclosure, an oxidizing atmosphere containing CO₂ is used as a basic oxidant to remove an excess carbon component from the recycled positive material, with the basic chemical reaction CO₂+C→2CO, thereby achieving controlled decarburization of waste positive materials.

The preparation method proposed in the present disclosure enables the oxidative decarburization to be performed simultaneously with the process of restoring the crystal structure of the material by sintering, whereby energy consumption and cost can be reduced.

Optionally, a partial pressure ratio P of CO₂ in the oxidizing atmosphere is 0.1 to 1, preferably 0.8 to 1, and for example, 0.2, 0.3, 0.4, 0.5, 0.6, 0.7, 0.8, or 0.9.

The P=P_{CO2}/Pₜₒₜₐₗ, where P_{CO2} is the partial pressure of CO₂ in the oxidizing atmosphere, and Pₜₒₜₐₗ is the total pressure of all the gases in the oxidizing atmosphere.

Optionally, the oxidizing atmosphere further includes any one or a mixture of at least two of protective gases and strong oxidizing gases. For example, the oxidizing atmosphere is a mixture of CO₂ and a protective gas, or the oxidizing atmosphere is a mixture of CO₂ and a strong oxidizing gas, or the oxidizing atmosphere is a mixture of CO₂, a protective gas, and a small amount of a strong oxidizing gas. In the present disclosure, the controllable decarburization of waste positive materials is achieved by controlling the oxidizing property of the mixed gas.

In the present disclosure, the oxidizing property of the mixed gas is controlled by regulating the partial pressure ratio of CO₂ to the strong oxidizing gas or the protective gas, thereby achieving controllable decarburization of waste positive materials. When the partial pressure ratio of CO₂ is less than 0.1, the oxidizing atmosphere has too strong or too weak oxidizing property, and the oxidizing atmosphere has low controllability.

The oxidizing atmosphere described in the present disclosure is obtained by means of mixing CO₂ with a protective gas or a strong oxidizing gas to regulate the oxidizing property of the mixed gas. In other words, the mixed gas prepared by mixing CO₂ with a strong oxidizing gas has a stronger oxidizing property, and the mixed gas prepared by mixing CO₂ with a protective gas has a weaker oxidizing property. In this way, controllable decarburization of waste positive materials is achieved by controlling the oxidizing property of the mixed gas. The obtained positive material has a carbon content no more than 2.86 wt%.

Optionally, the oxidizing atmosphere includes CO₂ and a protective gas, and a partial pressure ratio of the protective gas is not more than 0.95, for example, 0, 0.1, 0.2, 0.3, 0.4, 0.5, 0.6, 0.7, 0.8, 0.9, or 0.95.

Optionally, the oxidizing atmosphere includes CO₂ and a strong oxidizing gas, and a partial pressure ratio of the strong oxidizing gas is not more than 0.2, for example, 0.01, 0.05, 0.1, 0.12, 0.15, or 0.2.

The partial pressure ratio of the strong oxidizing gas in the oxidizing atmosphere described in the present disclosure is not more than 0.2. When the positive material is lithium iron phosphate, the oxidizing atmosphere used will not cause Fe²⁺ in the lithium iron phosphate to be oxidized to Fe³⁺.

Optionally, the strong oxidizing gas includes any one or a combination of at least two of oxygen, chlorine, fluorine, nitrogen dioxide, ozone, and sulfur trioxide, preferably oxygen, and for example oxygen, chlorine, fluorine, or the like.

Optionally, the protective gas includes any one or a combination of at least two of nitrogen, argon, helium, neon, krypton, and xenon, preferably nitrogen, and for example nitrogen, argon, helium, or the like.

Optionally, the positive material to be recycled has a particle size distribution D50 of 0.5 to 5.0 µm, for example, 0.8 µm, 1.0 µm, 1.5 µm, 1.8 µm, 2.0 µm, 2.5 µm, 3 µm, 3.5 µm, 4.0 µm, 4.5 µm, or 4.8 µm.

Optionally, the positive material to be recycled includes carbon-coated lithium iron phosphate to be recycled.

The positive material to be recycled is not specifically limited in the present disclosure. Any positive material that should be decarburized during recycling is applicable to the present disclosure. The positive material to be recycled may optionally be a positive material to be recycled which contains both excess carbon and a valence-variable metal element and from which the carbon should be removed by oxidization where the metal in a lower valence state is not oxidized to a higher valence state. Exemplarily, the positive material to be recycled is carbon-coated lithium iron phosphate to be recycled.

Optionally, the positive material to be recycled has a water content of 50 to 5,000 ppm, for example, 100 ppm, 300 ppm, 500 ppm, 1,000 ppm, 1,200 ppm, 1,500 ppm, 2,000 ppm, 2,500 ppm, 3,000 ppm, 3,500 ppm, 4,000 ppm or 4,500 ppm.

Optionally, the sintering is performed at a temperature of 650 to 800 °C, preferably 730 to 780 °C, and for example, 680 °C, 700 °C, 730 °C, 750 °C, or 780 °C.

When the sintering described in the present disclosure is performed at a temperature lower than 650 °C, the decarburization effect is not obvious. When the sintering is performed at a temperature higher than 800 °C, the original structure of lithium iron phosphate is affected, and even an impurity phase will appear therein.

Optionally, the sintering is performed for a duration of 5 to 20 h, preferably 10 to 15 h, and for example, 8 h, 10 h, 12 h, 15 h, 17 h, or 19 h.

Optionally, the sintering process is performed at a gas flow rate of 2 to 20 m³/h, preferably 5 to 15 m³/h, and for example, 3 m³/h, 5 m³/h, 8 m³/h, 10 m³/h, 12 m³/h, 15 m³/h, 17 m³/h, or 19 m³/h.

Optionally, the sintering method is dynamic sintering or static sintering.

Optionally, the dynamic sintering is sintering in a rotary kiln.

Optionally, the static sintering includes any one or a combination of at least two of sintering in a box furnace, sintering in a tube furnace, sintering in a roller kiln, and sintering in a pusher kiln.

Optionally, a material loading container in the static sintering is a graphite crucible.

Optionally, in the static sintering, the material is loaded to a thickness of 1 to 100 mm, preferably 10 to 50 mm, and for example, 5 mm, 10 mm, 20 mm, 30 mm, 50 mm, 70 mm, 80 mm, or 90 mm.

Optionally, the positive material to be recycled is prepared by a method including: stripping a waste positive material from waste battery electrode sheets, and then crushing the waste positive material to obtain the positive material to be recycled.

Optionally, the stripping includes wet stripping by immersion or dry stripping by calcination.

Optionally, the wet stripping by immersion includes: immersing the waste battery electrode sheets in a solution and performing a separation treatment.

Optionally, the separation treatment includes any one or a combination of at least two of heating, stirring, and ultrasonic treatment.

Optionally, the heating is performed at a temperature of 20 to 90 °C, preferably 50 to 80 °C, and for example, 30 °C, 40 °C, 50 °C, 60 °C, 70 °C, or 80 °C.

Optionally, the heating is performed for a duration of 20 to 120 min, for example, 40 min, 50 min, 60 min, 70 min, 80 min, 90 min, 100 min, or 110 min.

Optionally, the stirring is performed at a rotation speed of 200 to 1,000 r/min, preferably 300 to 500 r/min, and for example, 300 r/min, 400 r/min, 500 r/min, 600 r/min, 700 r/min, 800 r/min, or 900 r/min.

Optionally, the stirring is performed for a duration of 20 to 120 min, for example, 40 min, 50 min, 60 min, 70 min, 80 min, 90 min, 100 min, or 110 min.

Optionally, the ultrasonic treatment is performed at a frequency of 20 to 40 KHz, for example, 25 KHz, 30 KHz, or 35 KHz.

Optionally, the ultrasonic treatment is performed for a duration of 10 to 60 min, preferably 20 to 40 min, and for example, 15 min, 20 min, 30 min, 40 min, or 50 min.

Optionally, the solution is an alkaline solution or an organic solvent.

Optionally, the alkaline solution has a pH of 7 to 14, preferably 9 to 11, and for example, 8, 9, 10, 11, 12, or 13.

Optionally, the organic solvent includes any one or a combination of at least two of N,N-dimethylacetamide, dimethylsulfoxide, tetramethylurea, and trimethyl phosphate, for example, N,N-dimethylacetamide, dimethylsulfoxide, or the like.

Optionally, the dry stripping by calcination includes: putting the waste battery electrode sheets into a heating reactor and calcining the waste battery electrode sheets in a nitrogen atmosphere or in an argon atmosphere.

Optionally, the calcining is performed at a temperature of 400 to 600 °C, preferably 450 to 550 °C, and for example, 420 °C, 450 °C, 480 °C, 500 °C, 520 °C, 550 °C, or 580 °C.

Optionally, the calcining is performed for a duration of 1 to 10 h, preferably 1 to 3 h, and for example, 2 h, 3 h, 4 h, 5 h, 6 h, 7 h, 8 h, or 9 h.

Optionally, the heating reactor includes any one of a box furnace, a tube furnace, a roller kiln, a pusher kiln, or a rotary kiln.

Optionally, the stripping method is dry stripping by calcination, and the crushing method is mechanical crushing or jet pulverization.

Optionally, the stripping method is wet stripping by immersion, and the crushing method is wet ball milling or sand milling.

Optionally, the stripping method is wet stripping by immersion, and the crushed positive material is dried to obtain the positive material to be recycled.

Optionally, the drying method includes any one or a combination of at least two of suction filtration, pressure filtration, and spray drying.

Optionally, an air inlet for the spray drying is at a temperature of 200 to 260 °C, for example, 210 °C, 220 °C, 230 °C, 240 °C, or 250 °C.

Optionally, an air outlet for the spray drying is at a temperature of 70 to 130 °C, for example, 80 °C, 90 °C, 100 °C, 110 °C, or 120 °C.

Optionally, compressed air for the spray drying is fed at an air pressure of 0.1 to 0.8 MPa, for example, 0.2 MPa, 0.3 MPa, 0.4 MPa, 0.5 MPa, 0.6 MPa, or 0.7 MPa.

Optionally, the spray drying is performed at an air flow rate of 1 to 15 m³/h, for example, 2 m³/h, 5 m³/h, 8 m³/h, 10 m³/h, 12 m³/h, or 14 m³/h.

Optionally, in the spray drying, the material is fed at a rate of 0.5 to 10 L/h, for example, 1 L/h, 2 L/h, 3 L/h, 4 L/h, 5 L/h, 6 L/h, 7 L/h, 8 L/h, or 9 L/h.

Optionally, in the spray drying, the slurry has a solid content of 5% to 40%, for example, 7%, 8%, 10%, 15%, 20%, 25%, 30%, or 35%.

As an optional technical solution, a method for recycling a positive material is described in the present disclosure. The method includes the steps of:
(1) putting waste battery electrode sheets into a tube furnace and calcining the waste battery electrode sheets in a nitrogen atmosphere at 450 to 550 °C for 1 to 3 h to obtain the stripped waste positive material, and then mechanically crushing the waste positive material dry-stripped by calcination to obtain a positive material to be recycled with a particle size distribution D50 of 0.5 to 5.0 µm; and
(2) sintering the positive material to be recycled in a tube furnace at a temperature of 730 to 780 °C for 10 to 15 h under an oxidizing atmosphere containing CO₂, with a gas flow rate of 5 to 15 m³/h, to obtain the recycled positive material, wherein a partial pressure ratio of CO₂ in the oxidizing atmosphere containing CO₂ is 0.1 to 1.

A second objective of the present disclosure provides a positive material, which is obtained by the method for recycling a positive material described according to the first objective.

The positive material prepared by decarburization in the present disclosure has a capacity per gram increased by 5% to 10% compared with a non-decarburized positive material. The positive material prepared in the present disclosure has excellent cycle performance and has a capacity retention rate of 99% or more after 200 cycles at 1C rate.

Optionally, the positive material includes lithium iron phosphate.

Optionally, the positive material has a particle size distribution D50 of 0.2 to 5 µm, preferably 0.5 to 2 µm, and for example, 0.5 µm, 1 µm, 2 µm, 3 µm, or 4 µm.

Optionally, the positive material has a carbon content of 2 to 5 wt%, for example, 2.5 wt%, 2.6 wt%, 2.8 wt%, 3 wt%, 3.4 wt%, 3.5 wt%, 3.8 wt%, 4 wt%, 4.5 wt%, or 4.7 wt%.

Carbon in the positive material to be recycled includes coated carbon and uncoated carbon sources. The uncoated carbon includes carbon sources such as CNTs or graphene. In the present disclosure, a proper amount of uncoated carbon and coated carbon will be left during removal of an excess carbon component, so that the uncoated carbon will be further carbonized during the sintering process, to restore the coated carbon so as to improve the electrochemical performance of the material.

A third objective of the present disclosure provides use of the positive material described according to the second objective. The positive material is used in the field of batteries, and optionally used in the field of positive materials for lithium ion batteries.

A fourth objective of the present disclosure provides a lithium ion battery. The lithium ion battery includes the positive material described according to the second objective.

Compared with the related technologies, the present disclosure has the following advantageous effects.
(1) In the related technologies, the methods for recycling waste positive materials have not involved quantitative regulation of carbon content. The recycled positive materials contain a significantly higher carbon content and a lower amount of effective active substances, which will result in a reduced energy density. In the present disclosure, an oxidizing atmosphere containing CO₂ is used as an oxidant to remove an excess carbon component from the recycled positive material so that the obtained positive material contains not more than 2.86 wt% of carbon.
(2) In a further optional technical solution, in the case where the positive material is lithium iron phosphate, the oxidizing atmosphere used in the present disclosure will not cause Fe²⁺ in the lithium iron phosphate to be oxidized to Fe³⁺.
(3) In a further optional technical solution, the oxidizing atmosphere used in the present disclosure contains CO₂ as a basic oxidant, and then CO₂ is mixed with a protective gas or a strong oxidizing gas and the partial pressure of CO₂ is controlled to regulate the oxidizing property of the gas.
(4) The preparation method proposed in the present disclosure allows the processes of oxidative decarburization and sintering restoration to be carried out simultaneously, so that energy consumption and cost can be reduced. The positive material prepared by decarburization has a capacity per gram increased by 5% to 10% compared with a non-decarburized positive material. The positive material prepared in the present disclosure has excellent cycle performance and has a capacity retention rate of 99% or more after 200 cycles at 1C rate.

Other aspects will become apparent after reading and understanding the detailed description.

### Detailed Description of Embodiments

The following examples are given in the present disclosure to facilitate the understanding of the present disclosure. It should be appreciated by those skilled in the art that the described examples are merely intended to help understand the present disclosure and should not be regarded as specific limitations on the present disclosure.

### Example 1

A method for recycling a positive material includes the steps of:
(1) putting waste electrode sheets made of lithium iron phosphate into a tube furnace and calcining the waste electrode sheets made of lithium iron phosphate at 500 °C for 2 hours in a nitrogen atmosphere to obtain a stripped waste lithium iron phosphate material, and then pulverizing, by jet pulverization, the waste lithium iron phosphate material dry-stripped by calcination, to obtain a positive material to be recycled with a particle size distribution D50 of 1.5 µm; and
(2) placing the positive material to be recycled in an oxidizing atmosphere containing CO₂ in a partial pressure ratio of 1 in such a manner that the positive material to be recycled is spread in a graphite crucible at a thickness of 30 mm, and sintering the positive material to be recycled at 750 °C for 12 hours to obtain a positive material with a particle size D50 of 2.1 µm.

### Example 2

Example 2 is different from Example 1 in that the oxidizing atmosphere in step (2) is an atmosphere in which CO₂ is mixed with O₂, where a partial pressure ratio of CO₂ is 0.8, and a partial pressure ratio of O₂ is 0.2.

### Example 3

Example 3 is different from Example 1 in that the oxidizing atmosphere in step (2) contains a gas mixture of CO₂ and O₂, where a partial pressure ratio of CO₂ is 0.9, and a partial pressure ratio of O₂ is 0.1.

### Example 4

Example 4 is different from Example 1 in that the oxidizing atmosphere in step (2) is an atmosphere in which CO₂ is mixed with O₂, where a partial pressure ratio of CO₂ is 0.7, and a partial pressure ratio of O₂ is 0.3.

### Example 5

Example 5 is different from Example 1 in that the oxidizing atmosphere in step (2) is an atmosphere in which CO₂ is mixed with nitrogen, where a partial pressure ratio of CO₂ is 0.9, and a partial pressure ratio of nitrogen is 0.1.

### Example 6

Example 6 is different from Example 1 in that the oxidizing atmosphere in step (2) is an atmosphere in which CO₂ is mixed with nitrogen, where a partial pressure ratio of CO₂ is 0.1, and a partial pressure ratio of nitrogen is 0.9.

### Example 7

Example 7 is different from Example 1 in that the oxidizing atmosphere in step (2) is an atmosphere in which CO₂ is mixed with nitrogen, where a partial pressure ratio of CO₂ is 0.05, and a partial pressure ratio of nitrogen is 0.95.

### Example 8

Example 8 is different from Example 1 in that the sintering in step (2) is performed at a temperature of 730 °C.

### Example 9

Example 9 is different from Example 1 in that the sintering in step (2) is performed at a temperature of 780 °C.

### Example 10

A method for recycling a positive material includes the steps of:
(1) immersing waste electrode sheets made of lithium iron phosphate in dimethylsulfoxide and making the waste electrode sheets made of lithium iron phosphate to undergo a ultrasonic treatment at 20 KHz for 10 minutes to obtain a wet-stripped positive material, performing wet ball milling to the positive material such that the positive material is ball-milled to a D50 of 0.8 µm, and then spray-drying the crushed positive material, to obtain a positive material to be recycled with a particle size D50 of 1.0 µm, wherein the slurry of spray drying has a solid content of 5%; and
(2) placing the positive material to be recycled in an oxidizing atmosphere containing CO₂ in a partial pressure ratio of 1 in such a manner that the positive material to be recycled is spread in a graphite crucible at a thickness of 30 mm, and sintering the positive material to be recycled at 780 °C for 10 hours, to obtain a positive material with a particle size D50 of 1.8 µm.

### Example 11

A method for recycling a positive material includes the steps of:
(1) immersing waste electrode sheets made of lithium iron phosphate in N,N-dimethylacetamide and making the waste electrode sheets made of lithium iron phosphate to undergo ultrasonic treatment at 40 KHz for 60 minutes to obtain a wet-stripped positive material, performing wet ball milling to the positive material such that the positive material is ball-milled to a D50 of 0.8 µm, and then spray-drying the crushed positive material, to obtain a positive material to be recycled with a particle size D50 of 1.0 µm, wherein the slurry of spray drying has a solid content of 40%; and
(2) placing the positive material to be recycled in an oxidizing atmosphere containing CO₂ in a partial pressure ratio of 1 in such a manner that the positive material to be recycled is spread in a graphite crucible at a thickness of 30 mm, and sintering the positive material to be recycled at 730 °C for 15 hours, to obtain a positive material with a particle size D50 of 1.5 µm.

### Comparative Example 1

Comparative Example 1 is different from Example 1 in that in step (2), the positive material to be recycled obtained in step (1) is sintered in a nitrogen atmosphere at 750 °C for 12 hours, rather than being oxidized in an oxidizing atmosphere.

### Comparative Example 2

Comparative Example 2 is different from Example 1 in that the oxidizing atmosphere in step (2) is a nitrogen dioxide atmosphere, containing nitrogen dioxide in a partial pressure ratio of 1.

### Performance Testing:

The performance of each of the prepared positive materials was tested below.
(1) Battery Assembling: A CR2025 type button battery was assembled from a positive electrode sheet made of the positive material prepared in the present disclosure, a negative electrode made of a metal lithium sheet, a separator Celgard 2400, and an electrolyte made of a mixed solution of 1 mol/L LiPF₆, dimethyl carbonate, and ethyl methyl carbonate (in a volume ratio of 1:1:1). The positive electrode sheet was fabricated by a process including: mixing the prepared positive material, a conductive agent made of acetylene black, and a binder made of PVDF (polyvinylidene fluoride), in a mass ratio of 93:2:3, in the presence of N-methylpyrrolidone (NMP) as a solvent, to form a slurry and then coating an aluminum foil with the slurry, slowly baking the coated aluminum foil in a common oven at 50 °C and then transferring the aluminum foil to a vacuum oven where it was dried at 110 °C for 10 hours, to obtain a required electrode sheet, which was rolled and die-cut into a disc with a diameter of 8.4 mm as the positive electrode sheet.
(2) Electrochemical Test: The fabricated button battery was tested on a LAND battery test system manufactured by Wuhan Jinnuo Electronics Co., Ltd. under a room temperature condition, where the charge and discharge voltages were in the range of 3.0 to 4.3V, and the current density at 1C was defined at 170 mA/g. The capacity retention rate after 200 cycles under the current density at 1C and the rate performance at 0.1C, 0.3C, 0.5C, 1C, 2C, 3C, 5C, and 10C were tested.
(3) Testing of Compacted Density: The compacted density was tested by using a compacted density tester at a pressure of 6,600 pounds with a cross-sectional area of 1.3 cm².
(4) Testing of Percentage Contents of Elements: The percentage contents of elements were tested by using an inductively coupled plasma spectrometer.

The test results obtained are listed in Table 1 and Table 2, respectively.

**Table 1. Physical and Chemical Properties of the Finished Products of the Examples**

| | Compacted Density (g/cm³) | C (wt%) | Fe²⁺ (wt%) | Fe³⁺ (wt%) | Fe³⁺/Fe²⁺ (%) | 200-Cycle Capacity Retention Rate (%) |
|---|---|---|---|---|---|---|
| Example 1 | 2.29 | 2.32 | 32.68 | 0.19 | 0.581 | 99.5 |
| Example 2 | 2.17 | 2.15 | 31.89 | 0.28 | 0.878 | 99.3 |
| Example 3 | 2.31 | 2.15 | 32.48 | 0.22 | 0.677 | 99.4 |
| Example 4 | 2.10 | 2.07 | 31.68 | 0.31 | 0.978 | 99.0 |
| Example 5 | 2.28 | 2.35 | 32.98 | 0.19 | 0.576 | 99.1 |
| Example 6 | 2.30 | 2.45 | 33.25 | 0.18 | 0.541 | 99.4 |
| Example 7 | 2.32 | 2.86 | 33.45 | 0.18 | 0.538 | 99.3 |
| Example 8 | 2.31 | 2.35 | 32.25 | 0.19 | 0.589 | 99.2 |
| Example 9 | 2.27 | 2.29 | 33.24 | 0.19 | 0.571 | 99.3 |
| Example 10 | 2.31 | 2.15 | 32.50 | 0.27 | 0.830 | 99.4 |
| Example 11 | 2.30 | 2.16 | 32.52 | 0.25 | 0.769 | 99.3 |
| Comparative Example 1 | 2.21 | 4.86 | 32.11 | 0.18 | 0.561 | 98.7 |
| Comparative Example 2 | 2.23 | 1.95 | 32.21 | 0.68 | 2.11 | 85.2 |

**Table 2. Rate Performance of the Finished Products of the Examples (mAh/g)**

| | 0.1C | 0.3C | 0.5C | 1C | 2C | 3C | 5C | 10C |
|---|---|---|---|---|---|---|---|---|
| Example 1 | 161.4 | 158.1 | 149.5 | 140.5 | 135.8 | 130.5 | 110.6 | 101.2 |
| Example 2 | 159.5 | 156.9 | 146.2 | 136.5 | 130.6 | 126.6 | 107.4 | 99.3 |
| Example 3 | 160.5 | 157.9 | 148.2 | 138.5 | 132.6 | 128.6 | 108.4 | 100.3 |
| Example 4 | 158.5 | 152.9 | 145.3 | 135.4 | 128.4 | 125.4 | 104.5 | 95.4 |
| Example 5 | 160.9 | 157.9 | 149.2 | 140.2 | 135.4 | 129.4 | 109.4 | 100.5 |
| Example 6 | 160.0 | 157.1 | 148.0 | 137.9 | 130.8 | 127.5 | 106.8 | 94.6 |
| Example 7 | 156.5 | 154.2 | 145.6 | 134.8 | 128.4 | 126.4 | 105.2 | 92.1 |
| Example 8 | 159.1 | 156.5 | 147.3 | 138.1 | 133.4 | 128.1 | 108.7 | 99.8 |
| Example 9 | 160.0 | 157.1 | 148.2 | 139.0 | 134.5 | 128.9 | 109.1 | 100.2 |
| Example 10 | 162.2 | 157.6 | 148.8 | 139.8 | 133.4 | 129.1 | 105.8 | 95.6 |
| Example 11 | 161.0 | 157.2 | 148.2 | 139.6 | 132.9 | 128.8 | 105.2 | 95.0 |
| Comparative Example 1 | 158.3 | 151.6 | 133.7 | 127.5 | 118.7 | 106.2 | 76.2 | 1.0 |
| Comparative Example 2 | 159.6 | 152.8 | 134.4 | 125.6 | 109.5 | 98.1 | 72.6 | 0.5 |

It can be seen from Table 1 and Table 2 that, in each of Examples 1 to 11 of the present disclosure, an oxidizing atmosphere containing CO₂ is used as a basic oxidant, the oxygen potential of the atmosphere is regulated by adding oxygen or nitrogen, and then the carbon component in the recycled positive material is controlled by oxidative decarburization. The prepared positive material has a lower carbon content, being no more than 2.86 wt%. The oxidizing atmosphere of the present disclosure has weaker oxidizing property and will not cause Fe²⁺ in the positive material consisting of lithium iron phosphate to be oxidized to Fe³⁺. The prepared positive material has good cycle stability and rate performance and has a capacity retention rate of 99.0% or more after 200 cycles.

It can be seen from Table 1 and Table 2 that Example 4 exhibits poorer cycle stability and rate performance and a larger Fe³⁺/Fe²⁺ value than Example 1. This may be because Example 4 involves an excessively small partial pressure of CO₂ and an excessively large partial pressure of O₂, whereby the oxidizing atmosphere has stronger oxidizing property. Thus, not only an excess carbon component is removed from the waste electrode sheet made of lithium iron phosphate, but also a carbon component with which lithium iron phosphate is coated is stripped from the waste lithium iron phosphate material, and at the same time Fe²⁺ in the waste lithium iron phosphate material is partially oxidized to Fe³⁺. As a result, the prepared positive material exhibits poorer cycle stability and rate performance and a larger Fe³⁺/Fe²⁺ value.

It can be seen from Table 1 and Table 2 that Example 7 exhibits a higher C content, poorer rate performance, and lower capacity per gram than Example 1. This may be because Example 7 involves an excessively small partial pressure of CO₂ and an excessively large partial pressure of nitrogen, whereby the oxidizing atmosphere has weaker oxidizing property, resulting in a higher carbon content in the prepared positive material. As a result, the prepared positive material contains a lower amount of an active substance and has lower capacity.

It can be seen from Table 1 and Table 2 that Comparative Example 1 exhibits a higher C content, a lower capacity retention rate after 200 cycles, poorer rate performance, and lower capacity per gram than Example 1. This may be because the positive material in Comparative Example 1 is not subjected to the oxidative decarburization process. The resulting positive material contains a higher amount of carbon and a lower amount of an active substance. Example 1 exhibits a capacity per gram increased by 5% to 10% as compared with Comparative Example 1.

It can be seen from Table 1 and Table 2 that Comparative Example 2 exhibits poorer cycle stability and rate performance than Example 1. This may be because the oxidizing atmosphere in Comparative Example 2 is nitrogen dioxide, having stronger oxidizing property, whereby Fe²⁺ in the positive material consisting of lithium iron phosphate is oxidized to Fe³⁺ and a carbon component with which lithium iron phosphate is coated is stripped from the waste lithium iron phosphate material at high temperature. As a result, the prepared positive material has poorer cycle stability and rate performance.

The applicant declares that the detailed process equipment and process procedures of the present disclosure are described in the present disclosure by using the above examples, but the present disclosure is not limited to the detailed process equipment and process procedures described above. In other words, it is not intended that the present disclosure must be implemented by the detailed process equipment and process procedures described above.

## Claims

1. A method for recycling a positive material, **characterized by** comprising a step of:
sintering a positive material to be recycled in an oxidizing atmosphere, to obtain a recycled positive material,
wherein gases in the oxidizing atmosphere comprise CO₂.

2. The method according to claim 1, wherein a partial pressure ratio P of CO₂ in the oxidizing atmosphere is 0.1 to 1, preferably 0.8 to 1; and
optionally, the P=P_{CO2}/Pₜₒₜₐₗ, where Pco2 is a partial pressure of CO₂ in the oxidizing atmosphere, and Pₜₒₜₐₗ is a total pressure of all the gases in the oxidizing atmosphere.

3. The method according to claim 1 or 2, wherein the oxidizing atmosphere further comprises any one of a protective gas and a strong oxidizing gas or a mixture of at least two therefrom;
optionally, the oxidizing atmosphere comprises CO₂ and the strong oxidizing gas, and a partial pressure ratio of the strong oxidizing gas is not more than 0.2;
optionally, the oxidizing atmosphere comprises CO₂ and the protective gas, and a partial pressure ratio of the protective gas is not more than 0.95;
optionally, the strong oxidizing gas comprises any one of oxygen, chlorine, fluorine, nitrogen dioxide, ozone and sulfur trioxide or a combination of at least two therefrom, preferably oxygen; and
optionally, the protective gas comprises any one of nitrogen, argon, helium, neon, krypton and xenon or a combination of at least two therefrom, preferably nitrogen.

4. The method according to any one of claims 1 to 3, wherein the positive material to be recycled has a particle size distribution D50 of 0.5 to 5.0 µm ;
optionally, the positive material to be recycled comprises carbon-coated lithium iron phosphate to be recycled; and
optionally, the positive material to be recycled has a water content of 50 to 5,000 ppm.

5. The method according to any one of claims 1 to 4, wherein the sintering is performed at a temperature of 650 to 800 °C, preferably 730 to 780 °C;
optionally, the sintering is performed for a duration of 5 to 20 h, preferably 10 to 15 h;
optionally, the sintering process is performed at a gas flow rate of 2 to 20 m³/h, preferably 5 to 15 m³/h;
optionally, the sintering method is dynamic sintering or static sintering;
optionally, the dynamic sintering is sintering in a rotary kiln;
optionally, the static sintering comprises any one of sintering in a box furnace, sintering in a tube furnace, sintering in a roller kiln, and sintering in a pusher kiln or a combination of at least two therefrom;
optionally, a material loading container in the static sintering is a graphite crucible; and
optionally, in the static sintering, a material is loaded at a thickness of 1 to 100 mm, preferably 10 to 50 mm.

6. The method according to any one of claims 1 to 5, wherein the positive material to be recycled is prepared by a method comprising: stripping a waste positive material from waste battery electrode sheets, and then crushing the waste positive material, to obtain the positive material to be recycled;
optionally, the stripping comprises wet stripping by immersion or dry stripping by calcination;
optionally, the wet stripping by immersion comprises: immersing the waste battery electrode sheets in a solution and performing a separation treatment;
optionally, the separation treatment comprises any one of heating, stirring, and ultrasonic treatment or a combination of at least two therefrom;
optionally, the heating is performed at a temperature of 20 to 90 °C, preferably 50 to 80 °C;
optionally, the heating is performed for a duration of 20 to 120 min;
optionally, the stirring is performed at a rotation speed of 200 to 1,000 r/min, preferably 300 to 500 r/min;
optionally, the stirring is performed for a duration of 20 to 120 min;
optionally, the ultrasonic treatment is performed at a frequency of 20 to 40 KHz;
optionally, the ultrasonic treatment is performed for a duration of 10 to 60 min, preferably 20 to 40 min;
optionally, the solution is an alkaline solution or an organic solvent;
optionally, the alkaline solution has a pH of 7 to 14, preferably 9 to 11;
optionally, the organic solvent comprises any one of N,N-dimethylacetamide, dimethylsulfoxide, tetramethylurea, and trimethyl phosphate or a combination of at least two therefrom;
optionally, the dry stripping by calcination comprises: putting the waste battery electrode sheets into a heating reactor and calcining the waste battery electrode sheets in a nitrogen atmosphere or in an argon atmosphere;
optionally, the calcining is performed at a temperature of 400 to 600 °C, preferably 450 to 550 °C;
optionally, the calcining is performed for a duration of 1 to 10 h, preferably 1 to 3 h; and
optionally, the heating reactor comprises any one of a box furnace, a tube furnace, a roller kiln, a pusher kiln, and a rotary kiln.

7. The method according to any one of claims 1 to 6, wherein a stripping method is dry stripping by calcination, and a crushing method is mechanical crushing or jet pulverization;
optionally, the stripping method is wet stripping by immersion, and the crushing method is wet ball milling or sand milling;
optionally, the stripping method is wet stripping by immersion, and a crushed positive material is dried to obtain the positive material to be recycled;
optionally, a drying method comprises any one of suction filtration, pressure filtration, and spray drying or a combination of at least two therefrom;
optionally, an air inlet for the spray drying is at a temperature of 200 to 260 °C;
optionally, an air outlet for the spray drying is at a temperature of 70 to 130 °C;
optionally, compressed air for the spray drying is fed at an air pressure of 0.1 to 0.8 MPa;
optionally, the spray drying is performed at an air flow rate of 1 to 15 m³/h;
optionally, in the spray drying, a material is fed at a rate of 0.5 to 10 L/h; and
optionally, in the spray drying, a slurry has a solid content of 5% to 40%.

8. The method for recycling a positive material according to any one of claims 1 to 7, comprising steps of:
(1) putting waste battery electrode sheets into a tube furnace and calcining the waste battery electrode sheets in a nitrogen atmosphere at 450 to 550 °C for 1 to 3 h, to obtain a stripped waste positive material, and then mechanically crushing a waste positive material dry-stripped by calcination, to obtain the positive material to be recycled with a particle size distribution D50 of 0.5 to 5.0 µm; and
(2) sintering the positive material to be recycled in a tube furnace at a temperature of 730 to 780 °C for 10 to 15 h under an oxidizing atmosphere containing CO₂, with a gas flow rate of 5 to 15 m³/h, to obtain the recycled positive material, wherein a partial pressure ratio of CO₂ in the oxidizing atmosphere containing CO₂ is 0.1 to 1.

9. A positive material, **characterized in that** the positive material is obtained by the method for recycling a positive material according to any one of claims 1 to 8.

10. The positive material according to claim 9, wherein the positive material comprises lithium iron phosphate.

11. The positive material according to claim 9, wherein the positive material has a particle size distribution D50 of 0.2 to 5 µm, preferably 0.5 to 2 µm; and
optionally, the positive material has a carbon content of 2 to 5 wt%.

12. Use of the positive material according to any one of claims 9 to 11, **characterized in that** the positive material is used in a field of batteries.

13. The use of the positive material according to claim 12, wherein the positive material is used in a field of positive materials for lithium ion batteries.

14. A lithium ion battery, **characterized by** comprising the positive material according to any one of claims 9 to 11.
